# FASCICULE DE BREVET EUROPEEN

(11) **EP 3 615 384 B1**
(45) Date de publication et mention de la délivrance du brevet: **11.08.2021**
(21) Numéro de dépôt: 18725272.1
(22) Date de dépôt: 19.04.2018
(51) Int. Cl.: B60R 19/03, B60R 19/34

(54) **DISPOSITIF ABSORBEUR D'ENERGIE POUR POUTRE PARE-CHOCS DE VEHICULE AUTOMOBILE**
ENERGIEDÄMPFUNGSVORRICHTUNG FÜR DEN STOSSFÄNGERTRÄGER EINES KRAFTFAHRZEUGS
ENERGY-ABSORBING DEVICE FOR THE BUMPER BEAM OF A MOTOR VEHICLE

(30) Priorité: 28.04.2017 FR 1753749
(43) Date de publication de la demande: 04.03.2020
(73) Titulaire: Valeo Systemes Thermiques, 78322 Le Mesnil Saint-Denis Cedex (FR)
(72) Inventeur: TRABELSI, Hamed, 78322 Le Mesnil Saint Denis cedex (FR); DA COSTA PITO, Sergio, 78322 Le Mesnil Saint Denis cedex (FR)
(74) Mandataire: Tran, Chi-Hai
(86) Numéro de dépôt international: PCT/FR2018/050988
(87) Numéro de publication internationale: WO 2018/197785

(56) Documents cités:
- DE-A1-102015 011 357
- FR-A1- 2 785 956
- US-A1- 2015 069 773

## Description

La présente invention se rapporte à un dispositif absorbeur d'énergie propre à assurer une protection en cas de choc notamment frontal sur un véhicule automobile. Plus particulièrement, l'invention concerne un dispositif absorbeur d'énergie pour poutre pare-chocs de véhicule automobile disposé entre la poutre pare-chocs et l'extrémité d'un longeron de véhicule en regard de la poutre pare-chocs ainsi que le procédé de fabrication d'un tel dispositif absorbeur d'énergie.

Document FR 2 785 956 divulgue un dispositif absorbeur d'énergie pour poutre pare-chocs de véhicule automobile, ledit dispositif absorbeur d'énergie étant destiné à faire la liaison entre une poutre pare-chocs et l'extrémité d'un longeron de véhicule en regard de la poutre pare-chocs le dispositif absorbeur d'énergie comportant au moins une première zone réalisée dans un matériau polymère renforcé et au moins une deuxième zone comprenant un première couche nominale réalisée dans un matériau polymère renforcé comportant des fibres. La deuxième zone présente au moins une couche additionnelle qui est superposée au moins partiellement sur la première couche nominale de manière à faire varier l'épaisseur de la deuxième zone.

Afin d'absorber l'énergie d'un choc notamment frontal au niveau d'une poutre pare-chocs d'un véhicule automobile, il est connu d'utiliser des dispositifs absorbeur d'énergie qui se déforment du fait des forces exercées par le choc. Ces dispositifs absorbeur d'énergie sont généralement réalisés en matériau métallique du fait de leur résistance. Cependant, ces dispositifs absorbeur d'énergie métalliques sont lourds et ne vont pas dans le sens de l'évolution des véhicules automobiles qui cherchent à réduire de plus en plus leur poids.

Afin de diminuer le poids des dispositifs absorbeur d'énergie il est connu de les réaliser en matériau plastique ou en matériau composite associant en particulier du plastique et du métal. Pour ce qui est des dispositifs absorbeur d'énergie en matériau plastique, ces derniers ne donnent pas entièrement satisfaction du fait qu'ils ont une énergie absorbée spécifique faible, c'est à dire que l'énergie qu'ils peuvent absorber par rapport à leur masse est faible. Ces dispositifs absorbeur d'énergie plastiques sont donc moins résistants. Concernant les dispositifs absorbeur d'énergie en matériau composite associant du plastique et du métal, ces derniers ont une meilleure énergie absorbée spécifique que les dispositifs absorbeur d'énergie plastiques, mais ils restent lourds.

Un des buts de la présente invention est de remédier au moins partiellement aux inconvénients de l'art antérieur et de proposer un dispositif absorbeur d'énergie léger et ayant une meilleure énergie absorbée spécifique.

Pour cela, l'invention propose un dispositif absorbeur d'énergie pour poutre pare-chocs de véhicule automobile, ledit dispositif absorbeur d'énergie étant destiné à faire la liaison entre une poutre pare-chocs et l'extrémité d'un longeron de véhicule en regard de la poutre pare-chocs, le dispositif absorbeur d'énergie comportant au moins une première zone réalisée dans un matériau polymère non-renforcé et au moins une deuxième zone comprenant un première couche nominale réalisée dans un matériau polymère renforcé comportant des fibres caractérisé en ce que la deuxième zone présente au moins une couche additionnelle qui est superposée au moins partiellement sur la première couche nominale de manière à faire varier l'épaisseur de la deuxième zone.

Ainsi, en faisant varier l'épaisseur de la deuxième zone par l'ajout ou non des couches additionnelles, il est possible de définir des profils de résistance spécifiques adaptés aux besoins du véhicule et configurer ainsi le dispositif absorbeur d'énergie en fonction de l'agencement du véhicule, notamment de sa poutre pare-chocs et des longerons, pour absorber les chocs de manière optimale.

Selon l'invention la deuxième zone présente des portions différentes où le nombre de couches en superposition est variable d'une portion à l'autre.

Un autre aspect selon l'invention est que l'épaisseur de la deuxième zone croît de manière linéaire sur l'ensemble de la longueur de la deuxième zone.

Un autre aspect selon l'invention est que les couches en superposition sont de dimension et/ou de formes différentes.

Un autre aspect selon l'invention est que le matériau polymère renforcé comporte des fibres de verre et/ou de carbone continues et/ou discontinues. Les fibres de verre et/ou de carbone pouvant être orientées dans une même direction ou dans des directions différentes.

Un autre aspect selon l'invention est que la couche nominale et la ou les couches additionnelles sont réalisées dans un même matériau.

L'invention concerne également un dispositif absorbeur d'énergie selon l'une des revendications précédentes, caractérisé en ce qu'il comporte :
∘ une base de fixation à un longeron de véhicule,
∘ une enveloppe externe creuse, et
∘ des parois internes disposées dans l'enveloppe externe creuse, l'enveloppe externe et les parois internes s'étendant depuis la base de fixation jusqu'à l'extrémité opposée du dispositif absorbeur d'énergie en liaison avec la poutre pare-chocs.

Un autre aspect selon l'invention est que l'enveloppe externe creuse correspond à la deuxième zone et que la base de fixation et les parois internes correspondent à la première zone.

L'invention concerne également un procédé de fabrication d'un dispositif absorbeur d'énergie tel que décrit précédemment comprenant les étapes suivantes :
- Pré-découpage des couches additionnelles destinées à être superposées au format voulu,
- Positionnement des couches additionnelles sur la couche nominale,
- Fixation de l'ensemble par chauffage puis estampage ou presse.

D'autres mode de réalisation proposent que :
- le matériau polymère non-renforcé de la première zone est choisi entre le polypropylène et le polyamide et le matériau polymère renforcé de la deuxième zone comporte du polypropylène ou du polyamide ;
- la base de fixation et l'enveloppe externe creuse sont réalisées en matériau polymère non-renforcé et que les parois internes sont réalisées en matériau polymère renforcé ;
- l'enveloppe externe creuse et les parois internes comportent une partie périphérique supérieure et une partie périphérique inférieure réalisées en matériau polymère non-renforcé et une partie centrale réalisée en matériau polymère renforcé ;
- la base de fixation est réalisée en matériau polymère non-renforcé ;
- la base de fixation est réalisée en matériau polymère renforcé ;
- le dispositif absorbeur d'énergie comporte en outre :
   ∘ une base intermédiaire de laquelle s'étend :
      ▪ une première enveloppe externe creuse en direction de la poutre pare-chocs de sorte à former une première cavité,
      ▪ une deuxième enveloppe externe creuse en direction du longeron de véhicule de sorte à former une deuxième cavité, et
   ∘ des parois internes disposées à la fois dans la première cavité et dans la deuxième cavité ;
- le dispositif absorbeur d'énergie est tel que :
   ∘ la base intermédiaire, la première enveloppe externe et la deuxième enveloppe externe sont réalisées en matériau polymère non-renforcé,
   ∘ les parois internes de la première cavité et de la deuxième cavité sont réalisées en matériau polymère renforcé ;
- le dispositif absorbeur d'énergie est tel que :
   ∘ la base intermédiaire, la première enveloppe externe et les parois internes de la première cavité sont réalisées en matériau polymère non-renforcé,
   ∘ la deuxième enveloppe externe et les parois internes entrecroisées de la deuxième cavité sont réalisées en matériau polymère renforcé ;
- le dispositif absorbeur d'énergie est tel que :
   ∘ une base de fixation à un longeron de véhicule et des rangés de structures alvéolées s'étendant depuis la base de fixation jusqu'à l'extrémité opposée du dispositif absorbeur d'énergie en liaison avec la poutre pare-chocs, la base de fixation et les structures alvéolées étant réalisées en matériau polymère non-renforcé, et
   ∘ une paroi sinueuse entourant au moins partiellement les rangés de structure alvéolées et s'étendant depuis la base de fixation jusqu'à l'extrémité opposée du dispositif absorbeur d'énergie en liaison avec la poutre pare-chocs, la paroi sinueuse étant réalisée en matériau polymère renforcé.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une poutre pare-chocs, de longerons, et d'un dispositif absorbeur d'énergie selon l'invention selon une vue de haut,
- la figure 2 montre une coupe longitudinale selon l'axe de coupe AA du dispositif absorbeur d'énergie de la figure 1 selon un premier mode de réalisation,
- la figure 3 montre une coupe longitudinale selon l'axe de coupe AA du dispositif absorbeur d'énergie de la figure 1 selon une variante du premier mode de réalisation,
- la figure 4 illustre une coupe transversale selon l'axe de coupe BB du dispositif absorbeur d'énergie de la figure 1 selon une variante du premier mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

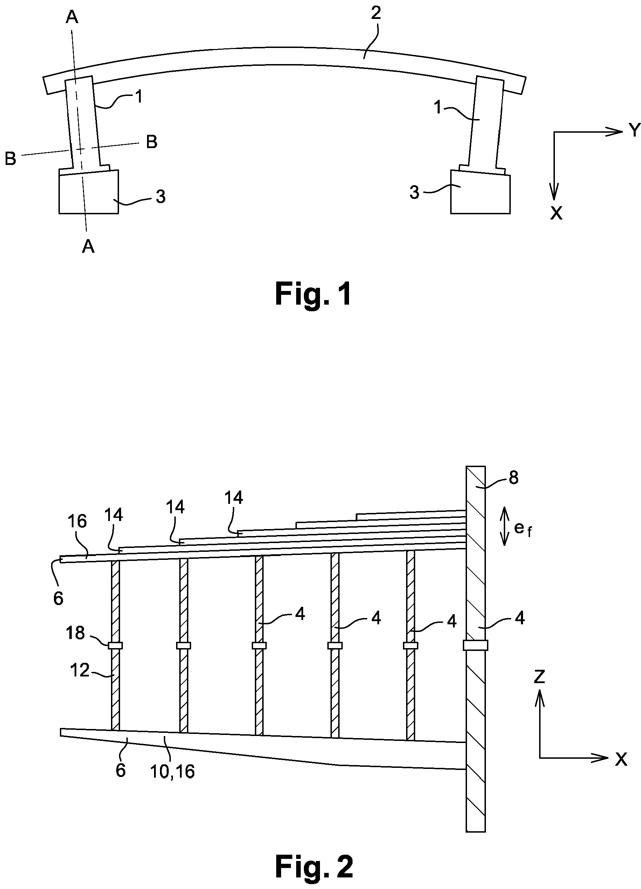

Les véhicules automobiles sont généralement munis d'une poutre pare-chocs 2 disposée en face avant. Comme le montre la figure 1, cette poutre pare-chocs 2 peut être fixée à un longeron 3 du véhicule. Afin d'absorber les chocs et d'éviter que l'énergie des chocs ne soit directement transmise aux longerons 3 ainsi qu'au reste du véhicule, la poutre pare-chocs 2 peut comporter des dispositifs absorbeur d'énergie 1 qui font la liaison entre la poutre pare-chocs 2 et les extrémités des longerons 3 qui sont en regards de ladite poutre pare-chocs 2. Ces dispositifs absorbeur d'énergie 1 se déforment selon une déformation programmée lorsque l'énergie du choc atteint un certain niveau afin d'absorber cette énergie.

Le dispositif absorbeur d'énergie 1 s'étend selon une direction longitudinale (X), transversale (Y) et verticale (Z), par exemple par rapport aux axes du véhicule, comme représenté par les axes sur la figure 1.

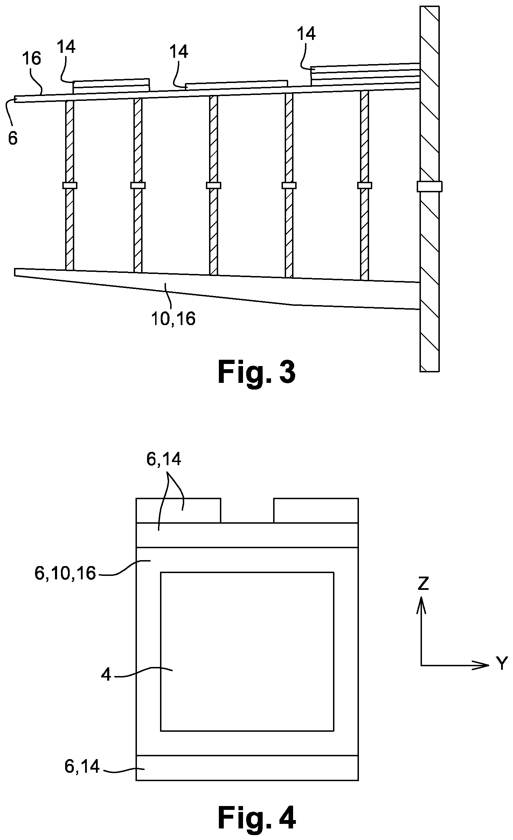

Comme le montre les figures 2 et 3, le dispositif absorbeur d'énergie 1 comporte au moins une première zone 4 réalisée dans un matériau polymère non-renforcé, illustré ici par les éléments en rayés, et au moins une deuxième zone 6 réalisée dans un matériau polymère renforcé comportant des fibres, illustrée ici par les éléments en unis.

Par matériau polymère renforcé, on entend que le matériau polymère comporte des fibres de verre et/ou de carbone. Par matériau polymère non-renforcé, on entend que le matériau polymère ne comporte pas de fibres. Ainsi, il est possible d'avoir un dispositif absorbeur d'énergie 1 comportant une première zone 4 réalisée dans un matériau présentant une première propriété d'absorption des chocs et une deuxième zone 6 réalisée dans un matériau présentant une deuxième propriété d'absorption des chocs. Bien évidemment, le dispositif absorbeur d'énergie 1 selon l'invention est tel que la première zone 4 et la deuxième zone 6 présentent des propriétés d'absorption des chocs différentes, ou autrement dit, le matériau polymère non-renforcé de la première zone 4 présente une propriété, ou profil, ou aptitude ou encore capacité, d'absorption des chocs différente du matériau polymère renforcé comportant des fibres de la deuxième zone 6. Selon l'invention, seul le matériau polymère renforcé comporte des fibres.

Le matériau polymère non-renforcé de la première portion 4 peut être choisi entre le polypropylène et le polyamide. Le matériau polymère renforcé de la deuxième portion 6 qui peut quant à lui également comporter du polypropylène ou du polyamide.

Les fibres du matériau polymère renforcé peuvent notamment être des fibres de verre et/ou de carbone. Ces fibres peuvent être des fibres discontinues et ainsi permettre la fabrication d'un dispositif absorbeur d'énergie par injection. Les fibres peuvent être des fibres continues et permettre la fabrication d'un dispositif absorbeur d'énergie 1 par thermoformage. Ces modes de fabrications ne sont pas limitatifs et il est tout à fait possible d'imaginer tout autre mode de fabrication connu et adapté à la fabrication d'un composant bi-matière et dont l'une des matières comporte des renforts sous forme de fibres. Les fibres peuvent être alignées dans une même direction ou dans des directions différentes.

Selon un premier mode de réalisation illustré à la figure 2 qui est une coupe longitudinale selon l'axe de coupe AA du dispositif absorbeur d'énergie 1 de la figure 1, le dispositif absorbeur d'énergie 1 comporte :
∘ une base de fixation 8 à un longeron 3 de véhicule disposée à une extrémité du dispositif absorbeur d'énergie 1,
∘ une enveloppe externe 10 creuse, et
∘ des parois internes 12 disposées dans la cavité interne de l'enveloppe externe 10 creuse.

L'enveloppe externe 10 s'étend depuis la base de fixation 8 jusqu'à l'extrémité opposée du dispositif absorbeur d'énergie 1 en liaison avec la poutre pare-chocs 2, tandis que les parois internes 12 s'étendent au sein de l'enveloppe externe 10, notamment entre deux parois de la surface interne de l'enveloppe externe 10 qui sont en regard l'une de l'autre. Les parois internes 12 et/ ou la base de fixation 8 peuvent comprendre des points de soudure 18 ou peuvent être réalisées d'un seul tenant.

Selon un autre mode de réalisation non illustré, l'enveloppe externe 10 et les parois internes 12 peuvent toutes deux s'étendre depuis la base de fixation 8 jusqu'à l'extrémité opposée du dispositif absorbeur d'énergie 1 en liaison avec la poutre pare-chocs 2.

La base de fixation 8 peut notamment comporter des orifices afin d'être fixée, par exemple au moyen de boulons, aux longerons 3.

La deuxième zone 6, ici l'enveloppe externe 10, présente au moins deux couches qui se superposent au moins partiellement de manière à faire varier l'épaisseur de la deuxième zone. Autrement dit, la deuxième zone 6 présente une première couche nominale 16 qui s'étend sur toute la longueur de l'enveloppe externe 10, et au moins sur une partie de sa longueur, une ou plusieurs couches additionnelles 14, ou encore un patch (traduit de l'anglais pour définir un élément plat) de manière à ce que l'épaisseur de la deuxième zone 6 soit plus grande lorsqu'il y a deux couches plutôt qu'une seule.

On peut ainsi définir la deuxième zone 6, ou en l'occurrence l'enveloppe externe 10, comme comprenant une première couche nominale 16 qui s'étend sur une longueur donnée, par exemple la distance séparant la poutre pare-chocs du longeron du véhicule, et une pluralité de couches additionnelles 14 qui s'étendent sur une longueur plus courte que celle de la première couche nominale 16.

Les couches additionnelles 14 peuvent être réalisées dans le même matériau que celui de la première couche nominale 16, à savoir en un matériau polymère, composite ou non, renforcé ou non comportant des fibres de verre et/ou de carbone, les fibres pouvant être orientées dans une même direction ou dans des directions différentes.

Les couches additionnelles 14 peuvent également être réalisées dans un matériau différent que celui de la première couche nominale 16 comme par exemple par une bande de thermoplastique par exemple sous la forme d'un matériau tissé comprenant des fibres de verres et/ou de carbone avec une matrice thermoplastique (aussi appelé organo-sheet). Le thermoplastique peut également être renforcé en comportant des fibres de verre et/ou de carbone.

Selon le mode de réalisation illustré sur la figure 2, les couches additionnelles 14 sont superposées régulièrement les unes sur les autres de manière à ce que l'épaisseur e_{f} de la deuxième zone 6 augmente régulièrement par palier. Ainsi, l'épaisseur e_{f} de la deuxième zone 6 augmente en fonction du nombre de couche additionnelle 14. Autrement dit, la deuxième zone 6 est en forme d'escalier. Ici, il y a la première couche nominale 16 et cinq couches additionnelles 14 superposées les unes sur les autres sur des longueurs différentes. L'épaisseur e_{f} de la deuxième zone 6 augmente de manière locale en fonction du nombre de couches additionnelles 14, qui varie entre zéro et cinq ici, définissant ainsi un gradient d'épaisseur.

L'invention ne se limite pas au nombre de couches additionnelles 14. Les couches additionnelles 14 peuvent être d'épaisseur égale ou différente, et de forme identique ou différente. Les couches additionnelles 14 peuvent s'étendre sur l'intégralité de l'enveloppe externe 10 ou ne recouvrir qu'une partie de l'enveloppe externe 10 comme illustré sur la figure 4. Dans le mode de réalisation représenté en figure 4, l'enveloppe externe 10, en particulier la couche nominale 16, est de section carrée et les couches additionnelles 14 sont réparties sur deux côtés opposés de cette section carrée. Les couches additionnelles 14 peuvent être réparties sur une partie, ou sur la totalité, de la largueur d'un ou des côtés de la couche nominale 16.

Bien évidemment, l'invention ne se limite pas au positionnement spécifique de ces couches additionnelles 14. Selon un mode de réalisation non illustré, les couches additionnelles 14 peuvent être agencées sur un seul côté, deux, trois, voire sur l'ensemble des côtés (par exemple sur six cotés si l'enveloppe externe est en de section hexagonal). L'enveloppe externe 10 peut être de section en forme de tout polygone, voire de section ovale.

Selon le mode de réalisation illustré sur la figure 3, les couches additionnelles 14 sont superposées de manière irrégulière les unes sur les autres de manière à ce que l'épaisseur de la deuxième zone 6 augmente irrégulièrement par palier avec l'épaisseur e_{f}, comprenant l'épaisseur de la première couche nominale 16 et de celle des couches additionnelles 14, varie en fonction du nombre de couche additionnelle 14 qui varie ici entre zéro et trois. Autrement dit, la deuxième zone 6 a une évolution en créneau. Ici, il y a la première couche nominale 16 et des couches additionnelles 14 certaines étant superposées, d'autres non, la couche nominale 16 n'étant pas superposée avec une couche additionnelle 14 sur toute sa longueur. Autrement dit, il y a certains créneaux où la couche nominale 16 n'est pas superposée avec une couche additionnelle 14. L'épaisseur e_{f} de la deuxième zone 6 augmente de manière locale en fonction du nombre de couches additionnelles 14 qui varie entre zéro et trois ici définissant ainsi un gradient d'épaisseur.

Selon les modes de réalisation illustrées aux figures 2 et 3, la deuxième zone 6 peut également présenter une couche nominale 16 qui augmente d'épaisseur linéairement avec ou sans la superposition de couches additionnelles 14.

La première zone 4, réalisée en un matériau polymère non-renforcé, présente une ductilité importante ce qui lui confère la capacité de se déformer, sans rompre, en cas de choc ; c'est-à-dire d'absorber une quantité d'énergie acceptable en cas de choc. Autrement dit, une forte capacité à se déformer plastiquement sans se rompre, la rupture se faisant lorsqu'un défaut telle une fissure ou cavité, induit par la déformation plastique, devient critique et se propage, la seconde zone 6 présente donc une forte aptitude à résister à cette propagation.

La deuxième zone 6, réalisée en un matériau polymère renforcé, présente un faible allongement à rupture ou autrement dit une faible capacité à s'allonger avant de rompre lorsqu'il est sollicité en traction.

Notamment, le dispositif absorbeur d'énergie 1 présente une bonne résistance au cisaillement.

De surcroît, en cas d'apparition de fissures sur la seconde zone 6, la première zone 4 permet d'empêcher la propagation de cette fissure et de conserver l'intégrité du dispositif absorbeur d'énergie 1.

En outre, dans des modes de réalisation préférés de l'invention, on peut éventuellement avoir recours à l'une et/ou à l'autre des dispositions suivantes :
- le matériau polymère non-renforcé de la première zone 4 est un polymère thermoplastique ;
- le matériau polymère non-renforcé de la première zone 4 comprend du polyamide et/ou du polypropylène ;
- la première zone 4 présente un allongement à rupture au moins égal à 40%, ou à 50%, à 60% ou à 80% ; la poutre de pare-chocs est donc capable d'absorber une importante quantité d'énergie ; plus généralement, la seconde zone 6 peut aussi présenter un allongement à rupture au moins égal à 100% ;
- le matériau polymère renforcé de la seconde zone 6 comporte un polymère thermoplastique ;
- le matériau polymère renforcé de la seconde zone 6, à savoir la couche nominale 16 et/ou les couches additionnelles 14, comporte des fibres de verre et/ou de carbone ; lorsqu'elle comporte des fibres de verre, la seconde zone 6 est moins couteuse, lorsqu'elle comporte des fibres de carbone, la seconde zone 6 présente des performances mécaniques améliorées ;
- le matériau polymère renforcé de la seconde zone 6 comporte des fibres continues et/ou des fibres discontinues qui sont orientées dans une même direction ou dans des directions différentes ;
- les couches additionnelles disposées alternativement l'une sur l'autre présentent une épaisseur comprise entre 0,1 millimètre et 10 millimètres ;
- les couches additionnelles 14 peuvent avoir une même épaisseur ou avoir des épaisseurs différentes d'une couche additionnelle 14 à l'autre, la poutre de pare-chocs est donc renforcée mécaniquement ;
- la deuxième zone 6 peut comprendre des couches additionnelles réalisées dans un matériau comprenant du polyamide renforcé par des fibres de verre et/ou du polypropylène renforcé par des fibres de verre et/ou de carbone ; le dispositif absorbeur d'énergie est donc renforcé mécaniquement.

L'invention concerne également un procédé de fabrication d'un dispositif absorbeur d'énergie 1 tel que décrit ci-dessus comprenant les étapes décrites ci-dessous. Un dispositif absorbeur d'énergie 1, notamment les parois internes 12, la base de fixation 8, et la couche nominale 16, peut être formé préalablement par injection bi-matière ou thermoformage.

Tout d'abord il y a une étape de pré-découpage des couches additionnelles 14 au format voulu, comme par exemple, sur la moitié de la largeur d'un côté de l'enveloppe externe 10, sur un quart de la longueur sur deux côté de l'enveloppe externe 10, etc.

Il y a ensuite une étape où les couches additionnelles 14 sont positionnées en butée contre la couche nominale 16 de manière à ce qu'elles soient superposées, et sont maintenues dans une telle configuration.

Enfin, les différents éléments sont fixés ensembles par une étape de chauffe et d'estampage ou de presse de manière à créer une liaison entre les différentes couches additionnelles 14 et la couche nominale 16.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

## Revendications

1. Dispositif absorbeur d'énergie (1) pour poutre pare-chocs de véhicule automobile, ledit dispositif absorbeur d'énergie (1) étant destiné à faire la liaison entre une poutre pare-chocs (2) et l'extrémité d'un longeron (3) de véhicule en regard de la poutre pare-chocs (2), le dispositif absorbeur d'énergie (1) comportant au moins une première zone (4) réalisée dans un matériau polymère non-renforcé et au moins une deuxième zone (6) comprenant un première couche nominale (16) réalisée dans un matériau polymère renforcé comportant des fibres **caractérisé en ce que** la deuxième zone (6) présente au moins une couche additionnelle (14) qui est superposée au moins partiellement sur la première couche nominale (16) de manière à faire varier l'épaisseur (ef) de la deuxième zone (6), la deuxième zone (6) présentant des portions différentes où le nombre de couche (14, 16) superposées est variable d'une portion à l'autre.

2. Dispositif absorbeur d'énergie (1) selon la revendication 1, dans lequel l'épaisseur (ef) de la deuxième zone (6) croît de manière linéaire sur l'ensemble de la longueur de la deuxième zone (6).

3. Dispositif absorbeur d'énergie (1) selon l'une des revendications précédentes, dans lequel les couches (14,16) en superposition sont de dimension et/ou de forme différente.

4. Dispositif absorbeur d'énergie (1) selon l'une des revendications 1 à 3, dans lequel le matériau polymère renforcé comporte des fibres de verre et/ou de carbone continues et/ou discontinues.

5. Dispositif absorbeur d'énergie (1) selon l'une des revendications 1 à 4, dans lequel la couche nominale (16) et la ou les couches additionnelles (14) sont réalisées dans un même matériau.

6. Dispositif absorbeur d'énergie (1) selon l'une des revendications précédentes, **caractérisé en ce qu'**il comporte :
∘ une base de fixation (8) à un longeron (3) de véhicule,
∘ une enveloppe externe (10) creuse, et
∘ des parois internes (12) et disposées dans l'enveloppe externe (10) creuse, l'enveloppe externe (10) et les parois internes (12) s'étendant depuis la base de fixation (8) jusqu'à l'extrémité opposée du dispositif absorbeur d'énergie (1) en liaison avec la poutre pare-chocs (2).

7. Dispositif absorbeur d'énergie (1) selon la revendication 6, l'enveloppe externe creuse (10) correspond à la deuxième zone (6) et que la base de fixation (8) et les parois internes (12) correspondent à la première zone (4).

8. Procédé de fabrication d'un dispositif absorbeur d'énergie selon une des revendication 1-7, comprenant les étapes suivantes :
- Pré-découpage des couches additionnelles (14) destinées à être superposées au format voulu,
- Positionnement des couches additionnelles sur la couche nominale,
- Fixation de l'ensemble par chauffage puis estampage ou presse.

## Patentansprüche

1. Energieabsorptionsvorrichtung (1) für Kraftfahrzeug-Stoßfängerträger, wobei die Energieabsorptionsvorrichtung (1) dazu bestimmt ist, die Verbindung zwischen einem Stoßfängerträger (2) und dem Ende eines Fahzeuglängsträgers (3) gegenüber dem Stoßfängerträger (2) herzustellen, wobei die Energieabsorptionsvorrichtung (1) mindestens einen ersten Bereich (4) aufweist, der aus einem nicht verstärkten Polymermaterial hergestellt ist, und mindestens einen zweiten Bereich (6), der eine erste Nennschicht (16) umfasst, die aus einem verstärkten Polymermaterial mit Fasern hergestellt ist, **dadurch gekennzeichnet, dass** der zweite Bereich (6) mindestens eine zusätzliche Schicht (14) aufweist, die wenigstens teilweise über der ersten Nennschicht (16) liegt, so dass die Dicke (e_{f}) des zweiten Bereichs (6) variiert, wobei der zweite Bereich (6) unterschiedliche Teilbereiche aufweist, wo die Anzahl übereinander liegender Schicht (14, 16) von einem Teilbereich zum anderen variabel ist.

2. Energieabsorptionsvorrichtung (1) nach Anspruch 1, wobei die Dicke (e_{f}) des zweiten Bereichs (6) über die gesamte Länge des zweiten Bereichs (6) linear zunimmt.

3. Energieabsorptionsvorrichtung (1) nach einem der vorhergehenden Ansprüche, wobei die übereinander gelagerten Schichten (14, 16) verschiedener Abmessung und/oder Form sind.

4. Energieabsorptionsvorrichtung (1) nach einem der Ansprüche 1 bis 3, wobei das verstärkte Polymermaterial durchgehende und/oder nicht durchgehende Glas- und/oder Kohlenstofffasern aufweist.

5. Energieabsorptionsvorrichtung (1) nach einem der Ansprüche 1 bis 4, wobei die Nennschicht (16) und die zusätzliche (n) Schicht(en) (14) aus einem selben Material hergestellt sind.

6. Energieabsorptionsvorrichtung (1) nach einem der vorhergehenden Ansprüche, **dadurch gekennzeichnet, dass** sie Folgendes aufweist:
▪ eine Basis zur Befestigung (8) an einem Fahzeuglängsträger (3),
▪ eine hohle Außenhülle (10), und
▪ Innenwände (12), die in der hohlen Außenhülle (10) angeordnet sind, wobei sich die Außenhülle (10) und die Innenwände (12) von der Befestigungsbasis (8) bis zum gegenüberliegenden Ende der Energieabsorptionsvorrichtung (1) in Verbindung mit dem Stoßfängerträger (2) erstrecken.

7. Energieabsorptionsvorrichtung (1) nach Anspruch 6, **dadurch gekennzeichnet, dass** die hohle Außenhülle (10) dem zweiten Bereich (6) entspricht und dass die Befestigungsbasis (8) und die Innenwände (12) dem ersten Bereich (4) entsprechen.

8. Verfahren zur Herstellung einer Energieabsorptionsvorrichtung nach einem der Ansprüche 1 bis 7, umfassend die folgenden Schritte:
- Vorschneiden der zusätzlichen Schichten (14), die übereinander zu legen sind, ins gewünschte Format,
- Positionieren der zusätzlichen Schichten auf der Nennschicht,
- Befestigen der Anordnung durch Erhitzen, danach Prägen oder Pressen.

## Claims

1. Energy-absorbing device (1) for a motor vehicle bumper beam, said energy-absorbing device (1) being designed to make the connection between a bumper beam (2) and the end of a vehicle side member (3) facing the bumper beam (2), the energy-absorbing device (1) including at least one first zone (4) made from a non-reinforced polymer material and at least one second zone (6) comprising a first nominal layer (16) made from a fiber-reinforced polymer material, **characterized in that** the second zone (6) has at least one additional layer (14) that is superposed at least partially on the first nominal layer (16) so as to vary the thickness (ef) of the second zone (6), the second zone (6) having different portions in which the number of superposed layers (14, 16) is variable from one portion to another.

2. Energy-absorbing device (1) according to Claim 1, in which the thickness (e_{f}) of the second zone (6) increases linearly over the entire length of the second zone (6).

3. Energy-absorbing device (1) according to one of the preceding claims, in which the superposed layers (14, 16) are of different dimensions and/or shapes.

4. Energy-absorbing device (1) according to one of Claims 1 to 3, in which the reinforced polymer material includes continuous and/or discontinuous glass and/or carbon fibers.

5. Energy-absorbing device (1) according to one of Claims 1 to 4, in which the nominal layer (16) and the additional layer (s) (14) are made from a single material.

6. Energy-absorbing device (1) according to one of the preceding claims, **characterized in that** it includes:
∘ a base (8) for fixing to a vehicle side member (3),
∘ a hollow outer casing (10), and
∘ inner walls (12) arranged in the hollow outer casing (10),
the outer casing (10) and the inner walls (12) extending from the fixing base (8) to the opposite end of the energy-absorbing device (1) connected to the bumper beam (2).

7. Energy-absorbing device (1) according to Claim 6, **characterized in that** the hollow outer casing (10) corresponds to the second zone (6) and that the fixing base (8) and the inner walls (12) correspond to the first zone (4).

8. Method for manufacturing an energy-absorbing device according to one of Claims 1-7, comprising the following steps:
- Pre-cutting the additional layers (14) for superposing to the desired format,
- Positioning the additional layers on the nominal layer,
- Fixing the assembly by heating then stamping or pressing.
